# EUROPEAN PATENT SPECIFICATION

(11) **EP 2 979 546 B1**
(45) Date of publication and mention of the grant of the patent: **19.07.2017**
(21) Application number: 14179494.1
(22) Date of filing: 01.08.2014
(51) Int. Cl.: A01M 7/00, B05B 9/04, B05B 12/04

(54) **Spray boom**
Spritzgestänge
Rampe de pulvérisation

(43) Date of publication of application: 03.02.2016
(73) Proprietor: Kverneland Nieuw-Vennep B.V., 2153 LR Nieuw-Vennep (NL)
(72) Inventor: van der Krogt, Rene, 2415 BX Nieuwerbrug aan den Rijn (NL)
(74) Representative: Berkenbrink, Kai-Oliver

(56) References cited:
- DE-A1-102007 012 796
- US-A1- 2004 135 003
- Deere & Company: "Pressure Circulation System (800i & 800i TF Series)", John Deere operator's manual, 28 November 2008 (2008-11-28), XP009181216, Retrieved from the Internet: URL:http://manuals.deere.com/omview/OMWZ00 19SUP_19/WZ00232_0000197_19_28NOV08_1.htm [retrieved on 2014-11-11]

## Description

The invention is based on a spray boom according to the preamble of Claim 1.

Spray booms of this type are generally known. For example, publication DE 10 2007 012 796 A1 discloses a spraying device, wherein the spraying device features a feed line and a return line that are separated from one another by a main valve. When a spraying fluid (hereinafter "fluid") should be ejected through the nozzles arranged in the feed line in a spraying mode, the main valve is closed such that no fluid can be admitted into the return line. When the lines should be rinsed in the circulation mode, the main valve is opened such that the fluid can be returned through the return line. However, the disadvantage of this spraying device can be seen in that no fluid flows through the return line in the spraying mode such that the return line may become clogged due to matter depositing of particles of the fluid therein.

Document Deere & Company: "Pressure Circulation System (800i & 800i TF Series)", John Deere operator's manual, 28 November 2008 (2008-11-28), XP009181216 discloses a spray boom, wherein fluid can be fed to the first fluid line via the second fluid line in the spray mode and fluid can be discharged from the first fluid line via the second fluid line in the circulation mode.

It therefore is the objective of the present invention to make available a spray boom that does not have the disadvantages of the prior art and, in particular, can deliver more fluid to the nozzles, especially without creating a big pressure drop between the nozzles, wherein the risk of clogging (deposition) the lines should be simultaneously reduced.

This objective is attained with the inventive spray boom according to Claim 1.

The basic idea of this invention consists of utilizing the second fluid line in each of the two operating modes (spraying mode and circulation mode), i.e. fluid flows through the second fluid line in both operating modes. The second fluid line therefore is not merely used as a return line in the circulation mode, but also as a feed line in the spraying mode. Since fluid constantly flows through the second fluid line, clogging thereof can be largely prevented. Due to the utilization of the second fluid line as a feed line in the spraying mode, the pressure drop occurring in the first fluid line during the spraying process can be reduced because both fluid lines are acted upon with pressure. In addition, the variable utilization of the second fluid line makes it possible to reduce the length and/or the cross section of the lines such that the quantity of fluid in the spray boom can also be reduced, wherein this leads to a lower weight and less residual fluid in the fluid lines. Furthermore, less fluid is required, e.g. for cleaning the fluid lines, in the circulation mode. This also makes it possible to reduce the weight of the spray boom.

The fluid may consist, for example, of liquid fertilizer, water, a fertilizer-water mixture and/or a chemicals-water mixture. However, liquid substances other than fertilizers can also be ejected or sprayed by means of the spray boom. The fluid composition in the two operating modes is initially explained below using the example of a fertilizer. In the spraying mode, a large proportion of the fluid consists of fertilizer. In the spraying mode, for example, the fluid consists of fertilizer, water or a mixture thereof. In the circulation mode, for example, the fluid consists of fertilizer, water or a mixture thereof. The spray boom is suitably towed in a driving direction, for example, by a tractor and/or in a hinged arrangement. In order to eject the fluid, the spray boom is switched into the spraying mode. In this spraying mode, fluid is fed to the first fluid line and the second fluid line (for example from a main tank) such that the fluid can be ejected through the opened spray nozzles. The spray boom is switched into the circulation mode after the desired quantity of fluid has been sprayed. In this circulation mode, the spray nozzles are closed such that no fluid can be ejected. A pump circulates the fluid, in principle, from a main tank through the first fluid line and the second fluid line and back in the direction of the main tank and/or a regulator system. According to the invention, it is particularly proposed that the spray nozzles can be individually and/or in pairs (sections) actuated such that each spray nozzle and/or the nozzles can be individually and/or in pairs (sections) opened, closed or controlled with respect to its respective throughput or aperture.

According to the invention, at least one connecting line is arranged between the first fluid line and the second fluid line, wherein fluid can be conveyed from the second fluid line into the first fluid line via said connecting line. The fluid advantageously can also be fed into the first fluid line via this connecting line such that an improved and more uniform fluid supply of the spray nozzles can be ensured. Furthermore, a valve, especially a one-way valve, is arranged in the at least one connecting line, wherein said valve opens in the direction of the first fluid line and closes in the direction of the second fluid line. This valve advantageously makes it possible to achieve an improved fluid supply of the nozzles in the spraying mode and to prevent fluid from flowing from the first fluid line into the second fluid line in the circulation mode. In this way, improved rinsing of the first fluid line and the second fluid line can be achieved in the circulation mode such that both fluid lines can be prevented from clogging.

Advantageous embodiments and enhancements of the invention are disclosed in the dependent claims, as well as in the description with reference to the drawings.

It is furthermore preferred that the at least one connecting line extends e.g. perpendicular to the first fluid line and perpendicular to the second fluid line. This perpendicular arrangement advantageously makes it possible to achieve an improved flow of fluid in the spraying mode. The spray boom may furthermore feature two, three, four or more connecting lines. It is preferred that the connecting lines are arranged parallel to one another and, in particular, extend perpendicular to the first fluid line.

According to another preferred enhancement, it is proposed that the second fluid line leads into a distal end of the first fluid line. The first fluid line features a distal end and a proximal end. The fluid initially flows into the proximal end of the first fluid line in the spraying mode, as well as in the circulation mode. The fluid flows through the first fluid line in the direction of its distal end. The second fluid line leads into this distal end of the first fluid line such that fluid can in the spraying mode be advantageously conveyed to the nozzles on the distal end of the first fluid line via the second fluid line and the fluid supply of the outer or distal nozzles therefore can be significantly improved. It is particularly possible to realize the supply to the distal ends immediately, i.e., with almost no delay. In the circulation mode, fluid can also directly flow into the second fluid line on the distal end of the first fluid line and then be returned into the main tank and/or the near regulator system.

According to another exemplary embodiment, it is proposed that the spray boom features a control device that is configured in such a way that it feeds fluid supplied from the main tank into the second fluid line in the spraying mode and discharges fluid from the second fluid line into the main tank and/or the near regulator system in the circulation mode. Such a control device makes it possible to significantly simplify the design of the spray boom.

According to another preferred embodiment, it is proposed that the fluid lines are at least predominantly arranged transverse to the driving direction of a tractor. This advantageously allows a particularly simple design of the spray boom. The first fluid line may, in particular, extend at least predominantly parallel to the second fluid line.

The spray boom may feature an additional first fluid line that is provided with additional spaced-apart spray nozzles and configured for feeding fluid to the additional spray nozzles. This additional first fluid line may be analogously realized in the form of a mirror image of the above-described first fluid line. The additional first fluid line may be arranged in the extension of the first fluid line such that the width of the spray boom can be advantageously increased. In this way, the quantity of the ejected fluid can be increased, particularly doubled, with the same design. In this embodiment, the spray boom features an additional second fluid line that is connected to the additional first fluid line. The preceding description of the second fluid line applies analogously to this additional second fluid line. Fluid can be fed to the additional first fluid line via the additional second fluid line in the spraying mode and discharged from the additional first fluid line via the additional second fluid line in the circulation mode. The additional second fluid line may be arranged, in particular, in the extension of the second fluid line and realized identically. All above-described enhancements also apply to the embodiment with a first fluid line, an additional first fluid line, a second fluid and an additional second fluid line. At least one additional connecting line may be arranged, in particular, between the additional first fluid line and the additional second fluid line, wherein this additional connecting line is preferably provided with an additional one-way valve of the above-described type. The additional second fluid line furthermore may lead into an additional distal end of the additional first fluid line. The additional fluid lines may, in particular, be at least predominantly arranged transverse to the driving direction and/or parallel to one another.

According to an enhancement, it is proposed that the control device is configured in such a way that it feeds fluid into the second fluid line and the additional second fluid line in the spraying mode and discharges fluid from the second fluid line and the additional second fluid line in the direction of the main tank and/or the near regulator system in the circulation mode.

Exemplary embodiments of the present invention are illustrated in the drawings and described in greater detail below.

### Brief Description of the Drawings

In the schematic drawings,
**Figure 1** shows a spray boom according to an exemplary embodiment in a spraying mode, and
**Figure 2** shows the spray boom according to Figure 1 in a circulation mode.

### Embodiments of the Invention

In the different figures, identical components are always identified by the same reference symbols and therefore usually also described or mentioned only once.

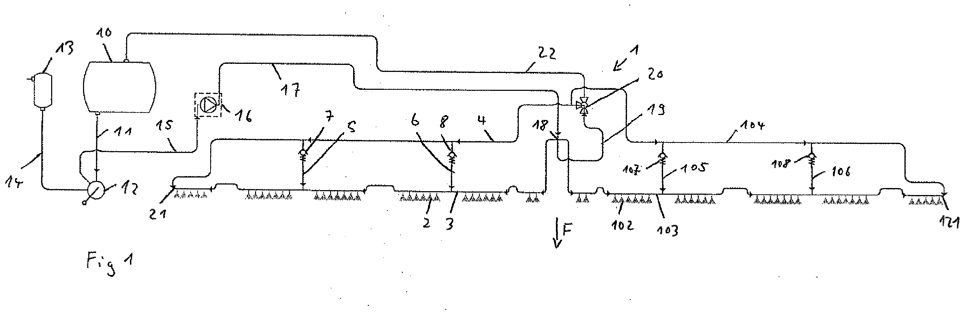

Figure 1 schematically shows an exemplary embodiment of a spray boom 1. The spray boom 1 is illustrated in a so-called spraying mode in Figure 1. The arrows on the lines indicate the flow direction of the fluid in this spraying mode. A fluid such as, for example, liquid fertilizer is arranged in a main tank 10 that is connected to a suction valve 12 via a line 11. A cleanwater tank 13 with cleanwater is connected to the suction valve 12 via an additional line 14. The fertilizer liquid is fed to a pump 16 via an additional line 15. The pump 16 pumps the fluid through a line 17 that leads to a junction 18, to which at least two lines or in this case three lines are connected. The fluid is conveyed into a first fluid line 3 that is arranged transverse to the driving direction F of a not-shown towing vehicle.

A number of spray nozzles 2 are arranged along the first fluid line 3 in a spaced-apart fashion. The fluid conveyed through the first fluid line 3 is ejected through these spray nozzles 2. An additional line 19 serves for conveying fluid to a control device 20 that is configured in such a way that it can, among other things, convey fluid into the second fluid line 4. The second fluid line 4 extends essentially parallel to the first fluid line 3 or, in other words, also transverse to the driving direction F. The second fluid line 4 conveys the fluid to the distal end 21 of the first fluid line 3. In this way, the spray nozzles 2 arranged on the distal end 21 can also be supplied with fluid from the outer side.

A first connecting line 5 and a second connecting line 6 are arranged between the first fluid line 3 and the second fluid line 4. The connecting lines 5, 6 extend parallel to one another and parallel to the driving direction F, i.e. perpendicular to the fluid lines 3, 4. The connecting lines 5, 6 are distributed, in particular, equidistantly along the spray nozzles 2.

Valves 7, 8, in this exemplary embodiment one-way valves respectively non-return valves 7, 8, are arranged in the connecting lines 5, 6. The valves 7, 8 are configured in such a way that they allow fluid to flow from the second fluid line 4 in the direction of the first fluid line 3 and prevent fluid from flowing from the first fluid line 3 in the direction of the second fluid line 4. Fluid can therefore be conveyed to the first fluid line 3 through each connecting line 5, 6 such that the fluid supply to the spray nozzles 2 can be significantly improved because the connecting lines 5, 6 promote the supply of the spray nozzles 2 with fluid.

In this embodiment, the spray boom 1 features an additional first fluid line 103 that is realized analogous to the first fluid line 3 and arranged in the form of a mirror image thereof referred to the driving direction F. The fluid line 103 also features spaced-apart spray nozzles 102. The fluid line 103 is likewise arranged transverse to the driving direction F. The control device 20 supplies the line 104 extending parallel to the driving direction F with fluid. The line 104 in turn supplies the distal end 121 of the line 103 with fluid. Connecting lines 105, 106 extending parallel to the driving direction F are arranged between the line 104 and the line 103. Valves 107, 108 are arranged in the connecting lines 105, 106 and configured in such a way that they allow fluid to flow from the line 104 to the line 103 and prevent fluid from flowing from the line 103 to the line 104. In other respects, the preceding description with reference to the fluid line 3 applies.

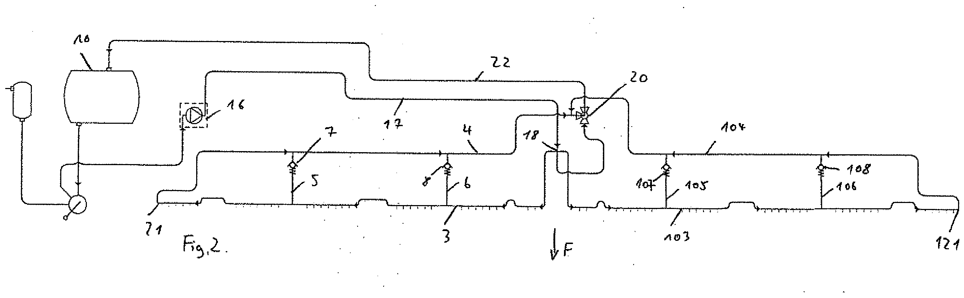

Figure 2 schematically shows the spray boom 1 of the embodiment according to Figure 1 in a different operating mode, namely a circulation mode. In this circulation mode, the spray nozzles 2, 102 are closed such that no fluid can be ejected from the spray nozzles 2, 102. In contrast to the spraying mode, the control device 20 is switched or configured in such a way that fluid is not conveyed into the lines 4, 104, but rather in the direction of the tank 10 via a line 22. In this circulation mode, the fluid also flows through the lines 3, 103 and, upon arriving on the distal end 21, 121, into the lines 4, 104. No fluid can flow through the connecting lines 5, 6, 105, 106 because these lines are closed by the valves 7, 8, 107, 108. In comparison with the spraying mode, the fluid therefore flows through the lines 4, 104 in the opposite direction, i.e. from the outside toward the inside or from the distal end 21, 121 in the direction of the junction 18 and/or control device 20. In this way, the lines 4, 104 are rinsed in an improved fashion such that these lines 4, 104 cannot become clogged. In other respects, the preceding description with reference to Figure 1 applies.

### List of Reference Symbols

- 1: Spray boom
- 2, 102: Spray nozzles
- 3, 103: Fluid line
- 4, 104: Fluid line
- 5, 6: Connecting line
- 105, 106: Connecting line
- 7, 8: Valve
- 107, 108: Valve
- 10: Main tank
- 11: Line
- 12: Suction valve
- 13: Cleanwater tank
- 14, 15: Line
- 16: Pump
- 17: Line
- 18: Junction
- 19: Line
- 20: Control device/main valve
- 21, 121: Distal end
- 22: Line
- F: Driving direction

## Claims

1. A spray boom (1) for spraying a fluid, particularly for agricultural purposes, featuring a first fluid line (3, 103) that is provided with spaced-apart spray nozzles (2, 102) and configured for feeding fluid to the spray nozzles (2, 102), as well as a second fluid line (4, 104) that is connected to the first fluid line (3, 103), wherein the spray boom (1) is configured in such a way that fluid can be fed to the first fluid line (3, 103) via the second fluid line (4, 104) in a spraying mode and fluid can be discharged from the first fluid line (3, 103) via the second fluid line (4, 104) in a circulation mode, **characterized in that** at least one connecting line (5, 6, 105, 106) is arranged between the first fluid line (3, 103) and the second fluid line (4, 104), wherein fluid can be conveyed from the second fluid line (4, 104) into the first fluid line (3, 103) through said connecting line, wherein a valve (7, 8, 107, 108) is arranged in the at least one connecting line (5, 6, 105, 106), wherein said valve opens in the direction of the first fluid line (3, 103) and closes in the direction of the second fluid line (4, 104),

2. The spray boom (1) according to Claim 1, **characterized in that** the at least one connecting line (5, 6, 105, 106) extends perpendicular to the first fluid line (3, 103) and perpendicular to the second fluid line (4, 104).

3. The spray boom (1) according to one of the preceding claims, **characterized in that** the second fluid line (4, 104) leads into a distal end (21, 121) of the first fluid line (3, 103).

4. The spray boom (1) according to one of the preceding claims, **characterized in that** the spray boom (1) features a control device (20) that is configured in such a way that it feeds fluid supplied from the main tank (10) into the second fluid line (4, 104) in the spraying mode and/or discharges fluid from the second fluid line (4, 104) into the main tank (10) and/or near a regulator system in the circulation mode.

5. The spray boom (1) according to one of the preceding claims, **characterized in that** the fluid lines (3, 4, 103, 104) are predominantly arranged transverse to the driving direction (F) of a tractor.

6. The spray boom (1) according to one of the preceding claims, **characterized in that** the first fluid line (3, 103) extends predominantly parallel to the second fluid line (4, 104).

7. The spray boom (1) according to one of the preceding claims, **characterized in that** the spray boom (1) features an additional first fluid line (3, 103) that is provided with additional spaced-apart spray nozzles (2, 102) and configured for feeding fluid to the additional spray nozzles (2, 102), as well as an additional second fluid line (4, 104) that is connected to the additional first fluid line (3, 103), wherein the spray boom (1) is configured in such a way that fluid can be fed to the additional first fluid line (3, 103) via the additional second fluid line (4, 104) in the spraying mode and fluid can be discharged from the additional first fluid line (3, 103) via the additional second fluid line (4, 104) in the circulation mode.

8. The spray boom (1) according to Claim 7, **characterized in that** the additional first fluid line (3, 103) is arranged transverse to the driving direction (F) of a tractor.

9. The spray boom (1) according to Claim 7 or 8, **characterized in that** the additional first fluid line (3, 103) is realized analogous to the first fluid line (3, 103).

10. The spray boom (1) according to one of Claims 7 to 9, **characterized in that** the additional second fluid line (4, 104) leads into an additional distal end (21, 121) of the additional first fluid line (3, 103).

## Patentansprüche

1. Spritzgestänge (1) zum Spritzen eines Fluids, besonders für landwirtschaftliche Zwecke, die eine erste Fluidleitung (3, 103), die mit voneinander beabstandeten Spritzdüsen (2, 102) bereitgestellt und konfiguriert ist, um den Spritzdüsen (2, 102) Fluid zuzuführen, sowie eine zweite Fluidleitung (4, 104) aufweist, die mit der ersten Fuidleitung (3, 103) verbunden ist, wobei das Spritzgestänge (1) derart konfiguriert ist, dass der ersten Fluidleitung (3, 103) Fluid über die zweite Fluidleitung (4, 104) in einen Spritzmodus zugeführt werden kann und Fluid aus der ersten Fluidleitung (3, 103) über die zweite Fluidleitung (4, 104) in einen Zirkulationsmodus abgeleitet werden kann, **dadurch gekennzeichnet, dass**
mindestens eine Verbindungsleitung (5, 6, 105, 106) zwischen der ersten Fluidleitung (3, 103) und der zweiten Fluidleitung (4, 104) angeordnet ist, wobei Fluid von der zweiten Fluidleitung (4, 104) in die erste Fluidleitung (3, 103) durch die Verbindungsleitung geleitet werden kann, wobei ein Ventil (7, 8, 107, 108) in der mindestens einen Verbindungsleitung (5, 6, 105, 106) angeordnet ist, wobei das Ventil in die Richtung der ersten Fluidleitung (3, 103) öffnet und in die Richtung der zweiten Fluidleitung (4, 104) schließt.

2. Spritzgestänge (1) nach Anspruch 1, **dadurch gekennzeichnet, dass** sich mindestens eine Verbindungsleitung (5, 6, 105, 106) senkrecht zu der ersten Fluidleitung (3, 103) und senkrecht zu der zweiten Fluidleitung (4, 104) erstreckt.

3. Spritzgestänge (1) nach einem der vorhergehenden Ansprüchen, **dadurch gekennzeichnet, dass** die zweite Fluidleitung (4, 104) in ein distales Ende (21, 121) der ersten Fluidleitung (3, 103) führt.

4. Spritzgestänge (1) nach einem der vorhergehenden Ansprüchen, **dadurch gekennzeichnet, dass** das Spritzgestänge (1) ein Steuerungsgerät (20) aufweist, das derart konfiguriert ist, dass es Fluid zuführt, das von dem Hauptbehälter (10) in die zweite Fluidleitung (4, 104) in den Spritzmodus geliefert wird, und/oder Fluid aus der zweiten Fluidleitung (4, 104) in den Hauptbehälter (10) und/oder nahe eines Regelungssystems in den Zirkulationsmodus ableitet.

5. Spritzgestänge (1) nach einem der vorhergehenden Ansprüchen, **dadurch gekennzeichnet, dass** die Fluidleitungen (3, 4, 103, 104) überwiegend quer zu der Antriebsrichtung (F) einer Zugmaschine angeordnet sind.

6. Spritzgestänge (1) nach einem der vorhergehenden Ansprüchen, **dadurch gekennzeichnet, dass** sich die erste Fluidleitung (3, 103) überwiegend parallel zu der zweiten Fluidleitung (4, 104) erstreckt.

7. Spritzgestänge (1) nach einem der vorhergehenden Ansprüchen, **dadurch gekennzeichnet, dass** das Spritzgestänge (1) eine zusätzliche erste Fluidleitung (3, 103), die mit zusätzlichen voneinander beabstandeten Spritzdüsen (2, 102) bereitgestellt und konfiguriert ist, um den zusätzlichen Spritzdüsen (2, 102) Fluid zuzuführen, sowie eine zusätzliche zweite Fluidleitung (4, 104) aufweist, die mit der zusätzlichen ersten Fluidleitung (3, 103) verbunden ist, wobei das Spritzgestänge (1) derart konfiguriert ist, dass der zusätzlichen ersten Fluidleitung (3, 103) Fluid über die zusätzliche zweite Fluidleitung (4, 104) in den Spritzmodus zugeführt werden kann und Fluid aus der zusätzlichen ersten Fluidleitung (3, 103) über die zusätzliche zweite Fluidleitung (4, 104) in den Zirkulationsmodus abgeleitet werden kann.

8. Spritzgestänge (1) nach Anspruch 7, **dadurch gekennzeichnet, dass** die zusätzliche erste Fluidleitung (3, 103) quer zu der Antriebsrichtung (F) einer Zugmaschine angeordnet ist.

9. Spritzgestänge (1) nach Anspruch 7 oder 8, **dadurch gekennzeichnet, dass** die zusätzliche erste Fluidleitung (3, 103) analog zu der ersten Fluidleitung (3, 103) ausgebildet ist.

10. Spritzgestänge (1) nach einem der Ansprüche 7 bis 9, **dadurch gekennzeichnet, dass** die zusätzliche zweite Fluidleitung (4, 104) in ein zusätzliches distales Ende (21, 121) der zusätzlichen ersten Fluidleitung (3, 103) führt.

## Revendications

1. Rampe de pulvérisation (1) pour pulvériser un fluide, particulièrement pour l'agriculture, présentant une première ligne de fluide (3, 103) qui est dotée de buses de pulvérisation (2, 102) espacées et configurée pour alimenter du fluide vers les buses de pulvérisation (2, 102), ainsi qu'une seconde ligne de fluide (4, 104) qui est reliée à la première ligne de fluide (3, 103),
dans laquelle la rampe de pulvérisation (1) est configurée de telle façon que du fluide peut être alimenté vers la première ligne de fluide (3, 103) par le biais de la seconde ligne de fluide (4, 104) dans un mode pulvérisation et du fluide peut être déchargé à partir de la première ligne de fluide (3, 103) par le biais de la seconde ligne de fluide (4, 104) dans un mode circulation, **caractérisée en ce**
**qu'**au moins une ligne de connexion (5, 105, 6, 106) est agencée entre la première ligne de fluide (3, 103) et la seconde ligne de fluide (4, 104), dans laquelle du fluide peut être transporté à partir de la seconde ligne de fluide (4, 104) vers l'intérieur de la première ligne de fluide (3, 103) par le biais de ladite ligne de connexion, dans laquelle un clapet (7, 8, 107, 108) est agencé dans l'au moins une ligne de connexion (5, 6, 105, 106), dans laquelle ledit clapet ouvre dans la direction de la première ligne de fluide (3, 103) et ferme dans la direction de la seconde ligne de fluide (4, 104).

2. Rampe de pulvérisation (1) selon la revendication 1, **caractérisé en ce que** l'au moins une ligne de connexion (5, 6, 105, 106) s'étend perpendiculairement la première ligne de fluide (3, 103) et perpendiculairement à la seconde ligne de fluide (4, 104).

3. Rampe de pulvérisation (1) selon l'une des revendications précédentes, **caractérisée en ce que** la seconde ligne de fluide (4, 104) mène vers l'intérieur d'une extrémité distale (21, 121) de la première ligne de fluide (3, 103).

4. Rampe de pulvérisation (1) selon l'une des revendications précédentes, **caractérisée en ce que** la rampe de pulvérisation (1) présente un dispositif de commande (20) qui est configuré de telle façon qu'il alimente du fluide fourni à partir du réservoir principal (10) vers l'intérieur de la seconde ligne de fluide (4, 104) dans le mode pulvérisation et/ou décharge du fluide de la seconde ligne de fluide (4, 104) vers l'intérieur du réservoir principal (10) et/ou près d'un système régulateur dans le mode circulation.

5. Rampe de pulvérisation (1) selon l'une des revendications précédentes, **caractérisée en ce que** les lignes de fluide (3, 4, 103, 104) sont agencées de façon prédominante transversalement à la direction de marche (F) d'un tracteur.

6. Rampe de pulvérisation (1) selon l'une des revendications précédentes, **caractérisée en ce que** la première ligne de fluide (3, 103) s'étend de façon prédominante parallèlement à la seconde ligne de fluide (4, 104).

7. Rampe de pulvérisation (1) selon l'une des revendications précédentes, **caractérisée en ce que** la rampe de pulvérisation (1) présente une première ligne de fluide (3, 103) supplémentaire qui est dotée de buses de pulvérisation (2, 102) espacées supplémentaires et configurée pour alimenter du fluide vers les buses de pulvérisation (2, 102) supplémentaires, ainsi qu'une seconde ligne de fluide (4, 104) supplémentaire qui est reliée à la première ligne de fluide (3, 103) supplémentaire, dans laquelle la rampe de pulvérisation (1) est configurée de telle façon que du fluide peut être alimenté vers la première ligne de fluide (3, 103) supplémentaire par le biais de la seconde ligne de fluide (4, 104) supplémentaire dans le mode pulvérisation et du fluide peut être déchargé à partir de la première ligne de fluide (3, 103) supplémentaire par le biais de la seconde ligne de fluide (4, 104) supplémentaire dans le mode circulation.

8. Rampe de pulvérisation (1) selon la revendication 7, **caractérisée en ce que** la première ligne de fluide (3, 103) supplémentaire est agencée transversalement à la direction de marche (F) d'un tracteur.

9. Rampe de pulvérisation (1) selon la revendication 7 ou 8, **caractérisée en ce que** la première ligne de fluide (3, 103) supplémentaire est réalisée de façon analogue à la première ligne de fluide (3. 103).

10. Rampe de pulvérisation (1) selon l'une des revendications 7 à 9, **caractérisée en ce que** la seconde ligne de fluide (4, 104) supplémentaire mène vers l'intérieur d'une extrémité distale (21, 121) supplémentaire de la première ligne de fluide (3, 103) supplémentaire.
